# EUROPEAN PATENT SPECIFICATION

(11) **EP 3 265 944 B1**
(45) Date of publication and mention of the grant of the patent: **07.10.2020**
(21) Application number: 16762261.2
(22) Date of filing: 04.03.2016
(51) Int. Cl.: G06F 21/10, G06Q 30/06, H04N 21/8355, G07F 17/32, G06F 21/12, H04L 29/06, H04L 29/08

(54) **DIGITAL MANAGEMENT OF CONTENT ASSETS IN THE CLOUD**
DIGITALE VERWALTUNG VON INHALTEN IN DER CLOUD
GESTION D'ACTIFS DE CONTENU NUMÉRIQUE DANS LE NUAGE

(30) Priority: 06.03.2015 US 201514640588
(43) Date of publication of application: 10.01.2018
(73) Proprietor: Sony Interactive Entertainment LLC, San Mateo, CA 94404 (US)
(72) Inventor: PERRY, David, San Mateo, California 94404 (US); TSUJIMOTO, Takuhito, San Mateo, California 94404 (US); SCHULTZ, Paul, San Mateo, California 94404 (US)
(74) Representative: D Young & Co LLP
(86) International application number: PCT/US2016/021057
(87) International publication number: WO 2016/144822

(56) References cited:
- WO-A2-2007/095567
- US-A1- 2003 217 010
- US-A1- 2006 107 046
- US-A1- 2008 147 530
- US-A1- 2012 232 973
- US-A1- 2012 232 973
- US-A1- 2014 214 920
- US-A1- 2014 283 092

## Description

### FIELD

The present disclosure relates to digital asset management. In particular, aspects of the present disclosure relate to systems and methods for transferring selected rights to digital assets, including, but not limited to, access, utilization, and field of use, between users.

### BACKGROUND

Digital rights management (DRM) is a class of technologies intended to control the use of digital content and devices after sale. Some DRM technologies, often known as "first generation DRM" are intended to control copying of, e.g., software and/or digital data. Other technologies, sometimes called "second-generation DRM" are designed to control executing, viewing, copying, printing, and altering of works or devices.

With the increasing prevalence of entirely digital application stores and the reliance on digital rights management (DRM) protection, the ability of users to share applications, including physical copies of applications as well as in-application data, has suffered. If a user wishes to recommend an application or share a particular feature in an application, it is less and less likely that a user would simply be able to hand over a physical copy of the application to another user and have that application function properly.

In the case of digital downloads, it would be cumbersome for one user to send an application to another user over a network, especially considering the limitations in the quality and bandwidth of networks established or used during the transfer of data, as well as the size (upwards of 30GB) of some applications. Digital application stores, however, are able to work around these limitations due to dedicated infrastructure. Additionally, a digital application store is able to provide any software patches and updates required to execute an application on a user's device, whereas an application transferred between two users may not include all of the necessary data required to function with ideal specifications. Previously proposed arrangements are disclosed in US 2012/232973 A1, US 2014/283092 A1 and US 2008/147530 A1.

Accordingly, there is a need in the art to find alternative means for users to recommend, sample, and share application data with other users. This is true of sharing both the application itself as well as certain features within the application. It is within this context that aspects of the present disclosure arise.

### SUMMARY

In accordance with certain implementations of the present disclosure, a method for sharing digital assets on client devices configured to operate on a network may include providing a user with a list of assets that can be borrowed from a providing user. A requesting user may then be able to request the use of an asset that can be borrowed. The requesting user may then receive certain rights, such as access to an application or application features, from the providing user. Alternative embodiments provide a method in which a providing user may grant asset rights to another user without first receiving a request.

In accordance with certain implementations of the present disclosure, a computing system may include at least one processor unit, and at least one memory unit coupled to the at least one processor unit. The at least one processor unit and the at least one memory unit may be configured to perform a method. The method may include sharing digital assets on a client devices configured to operate on a network, which may include providing a user with a list of assets that can be borrowed from a providing user. A requesting user may then be able to request the use of an asset that can be borrowed. The requesting user may then receive certain rights, such as access to an application or application features, from the providing user. Alternative embodiments provide a method in which a providing user may grant asset rights to another user without first receiving a request.

In accordance with certain implementations of the present disclosure, a non-transitory computer readable medium may computer readable instructions embodied therein. The computer readable instructions may be configured to implement a method when executed. The method may include sharing assets on a client devices configured to operate on a network, which may include providing a user with a list of assets that can be borrowed from a providing user. A requesting user may then be able to request the use of an asset that can be borrowed. The requesting user may then receive certain rights, such as access to an application or application features, from the providing user. Alternative embodiments provide a method in which a providing user may grant asset rights to another user without first receiving a request.

### BRIEF DESCRIPTION OF THE DRAWINGS

The teachings of the present disclosure can be readily understood by considering the following detailed description in conjunction with the accompanying drawings, in which:
FIG. **1** is a flow diagram of an example asset management technique between the client devices in accordance with certain aspects of the present disclosure.
FIG. **2** is a block diagram of an example system in accordance with certain aspects of the present disclosure.
FIG. **3** is a flow diagram of an example asset management technique from the providing user side in accordance with certain aspects of the present disclosure.
FIG. **4** is a flow diagram of an example asset management technique from the requesting user side in accordance with certain aspects of the present disclosure.
FIG. **5** illustrates a method for processing transfer of rights to digital assets on an intermediary server according to aspects of the present disclosure.

### DETAILED DESCRIPTION

Although the following detailed description contains many specific details for the purposes of illustration, anyone of ordinary skill in the art will appreciate that many variations and alterations to the following details are within the scope of the invention. Accordingly, the illustrative implementations of the present disclosure described below are set forth without any loss of generality to, and without imposing limitations upon, the claimed invention.

### Introduction

Aspects of the present disclosure relate to systems and methods for sharing application assets between client devices configured to operate on a network.

In accordance with certain aspects, a client device configured to operate on a network may provide a user with a list of one or more digital assets that can be borrowed from a providing user. The may then be able to request the use of an asset that can be borrowed from a providing user. The user may then receive certain rights, such as access to an application or application features, from the providing user. Alternative embodiments provide a method in which a providing user may grant asset rights to another user without first receiving a request.

### Implementation Details

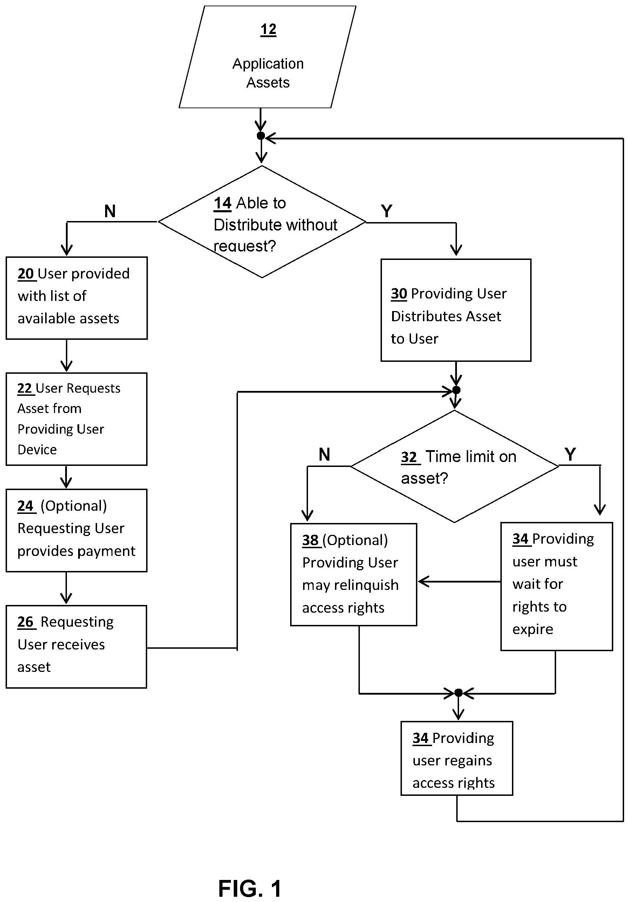

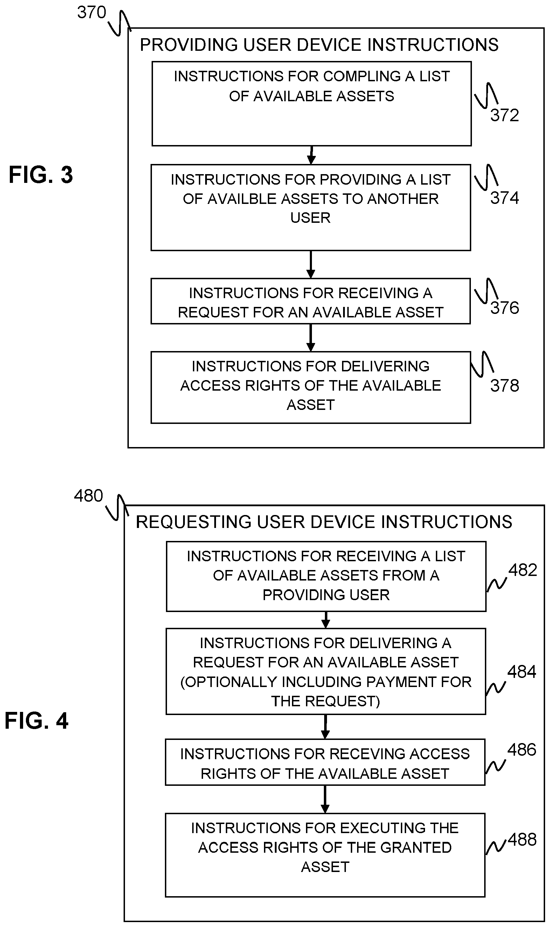

Turning now to FIG. **1****,** an illustrative example is provided of how a digital asset may be provided to a client device in response to a request received from a requesting user client device. In particular, FIG. **1** depicts an example process flow for providing a client device with an available application asset, in accordance with certain implementations of the present disclosure. It is noted that the example method of providing an application asset in FIG. **1** may have one or more aspects in common with the methods indicated in FIGS. **3** and **4****.** It is also important to note that the example of FIG. **1** is only a simplified example for purposes illustrating only certain aspects of how an application asset may be provided in accordance with the present disclosure.

At the outset, it is important to note that in this example, an application asset is provided to a client device that is requesting an asset from a providing user. In this example, as shown in FIG. **1****,** the digital asset **26** is provided in response to a request for said asset from a providing user **22** that is received by the providing user's client device. In alternative implementations, the providing user may be able to simply grant another user the rights to use a certain digital asset **30** by choosing a user to which the asset is delivered. However, in alternative implementations, an asset may be sent or provided under other circumstances. For example, an alternative embodiment may provide a method by which a granted asset access rights is received from a providing user **22,** without the need for a user to request access to the asset.

In accordance with certain aspects, where a digital asset **12** is available for distribution, the asset may be requested by another user **14.** Examples of digital assets include, but are not limited to: entire applications, demo applications, or features that can be utilized in a specific application. The rights to such assets may be granted with specific limitations, including but not limited to: selected rights out of a bundle of user rights, including the right to use an asset but not the right to transfer that asset; a limited time duration of the transfer (e.g., 1 day, 1 week, etc.); or limited field of use of rights, e.g., rights may be applicable across several titles but transfer may be applicable to a selected subset of titles. As a more particular example of the restriction of rights that are applicable across titles, consider the case of a video game asset in the form of a vehicle. The providing user may have rights to use the vehicle in one game title, e.g., a racing game, and also in a second video game title, e.g., an action adventure video game from the same publisher. The providing user may wish to allow transfer of rights to use the vehicle in the action-adventure game but not the racing game.

In the present example, a providing user is not able to select a user to which an application asset is delivered, and the asset may only be granted after receiving a request for said available asset. In accordance with certain aspects, when a providing user has assets **12** that are available for distribution, a user will be provided with a list of assets that are available for use upon request **20.** In this example, a user would select an available asset and send a request for use of that asset to the providing user's client device **22.** In alternative implementations, a form of payment or credit could be required in order for the requesting user to be granted access rights to the asset **24.** Examples of types of credit include, but are not limited to, forms of global currency, point or credit systems utilized by the client device platform network, or application-specific currency. In accordance with certain embodiments, varying amounts of credit could be redeemed for respectively varying durations of access rights to an asset. In still other alternative implementations, by way of example and not by way of limitation, credit may be automatically granted to a user upon the purchase of a client device or establishment of a client device profile, or may be earned by purchasing an application or completing in-application tasks in the present application or legacy application titles.

In accordance with certain aspects, once the providing user's client device receives a request for an asset, access rights to that asset would be granted to the requesting user **26.** In certain embodiments, these access rights would be granted indefinitely. In this example, however, the requesting user is be granted the access rights for a limited duration of time (e.g. 1 day, 1 week, etc.) **32,** and the providing user is required to wait until the time period granted to the requesting user expires before the providing user regains the access rights to the asset. In alternative implementations, the providing user would be able to relinquish the access rights of a requesting user at any time **38.** Assuming, by way of example, and not by way of limitation, that in such an implementation, a credit or payment had been exchanged for the right of access to an asset, the requesting user could be refunded the portion of credit redeemed to receive asset access rights for the specific time period in relation to the proportion of asset utilization time remaining before the access right was revoked.

In the present example, once the requesting user's asset access rights expire, those asset access rights will be returned to the providing user **34.** In accordance with certain embodiments, the list of a providing user's available assets may only be available to a user who appears on the providing user's "friends" list. In alternative embodiments, the list would be publicly available through the client device platform network. In still other alternative embodiments, the list would only be available only to those users who have formed a user group in accordance with a feature of a specific application. Additionally, alternative embodiments may allow the providing user to create a list of those assets that the user wishes to relinquish access to, and these lists may be provided over the client device platform network or over a social media network.

In some implementations, multiple users, including perhaps the providing user, could utilize a providing user's asset. In an alternative embodiment, a providing user may receive a reward for sharing an asset or having a certain number of users request an asset. By way of example, and not by way of limitation, the reward could be an identifier (e.g., an achievement or a trophy) linked to the user's profile. In an alternative embodiment, wherein credit is required for the exchange of an asset, a providing user could be rewarded monetarily, based on the number of users who acquire access rights to a user's asset or go on to purchase the asset for their own use after relinquishing access rights the providing user's asset.

It is emphasized that the example technique depicted in FIG. **1** is provided for purposes of illustration only, in order to highlight certain aspects of the present disclosure. In practice, implementations of the present disclosure may factor in additional or alternative considerations not depicted by the example of FIG. **1****,** and may be more complex than the simplified scheme depicted in FIG. **1****.**

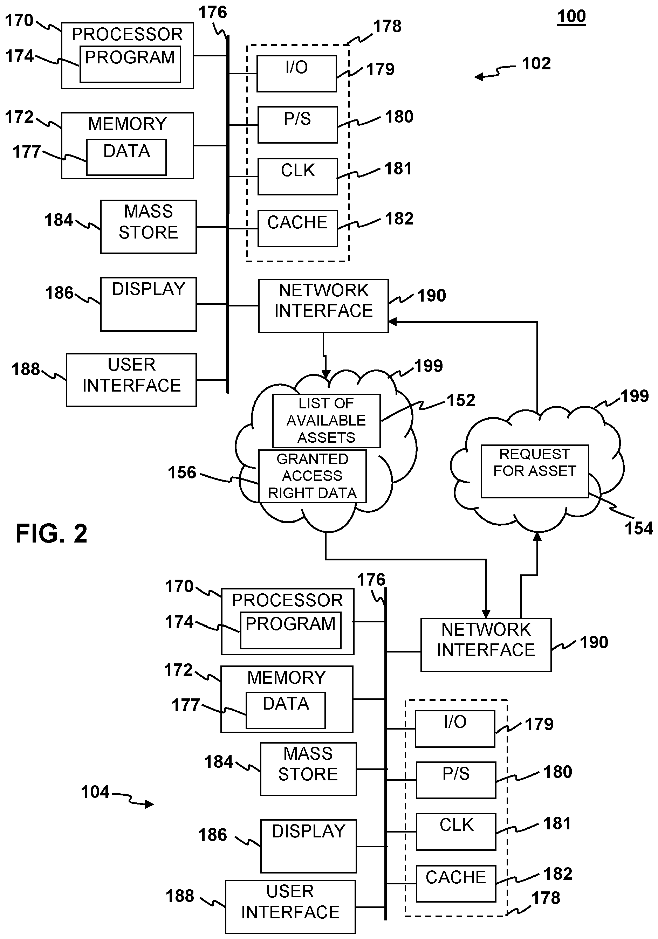

Certain implementations of aspects of the present disclosure include systems configured for asset management. By way of example, and not by way of limitation, FIG. **2** depicts a distributed computing system that includes two devices **102** and **104,** and the computing systems **102** and **104** are configured to transfer data over a network in accordance with certain aspects of the present disclosure. In certain implementations, the device **102** may be configured to execute instructions that have one or more aspects in common with those described with respect to FIG. **1** and/or FIG. **3****.** In certain implementations, the device **104** may be configured to execute instructions that have one or more aspects in common with one or more of those described above with respect to FIG. **1** or below with respect to FIG. **4****.** Either or both the devices **102** and **104** may be configured with suitable software and/or hardware to implement various aspects of the methods described herein. Either or both the devices **102** and **104** may be a server, an embedded system, mobile phone, personal computer, laptop computer, tablet computer, portable game device, workstation, game console, wearable device such as a smart watch, and the like.

In accordance with certain implementations, the device **102** may be a client device utilized by a providing user, and the device **104** may be a client device utilized by a requesting user. The client device **102** may be configured to provide a list of available digital assets **152** to the requesting user's client device **104** over a network **199** using an internet connection. The list **152** may identify the digital assets and the specific rights that are available for transfer for each asset on the list.

Either of the devices **102** and **104** may include one or more processor units **170,** which may be configured according to well-known architectures, such as, e.g., single-core, dual-core, quad-core, multi-core, processor-coprocessor, cell processor, and the like. Either of the devices **102** and **104** may also include one or more memory units **172** (e.g., RAM, DRAM, ROM, and the like). The processor unit **170** may execute one or more programs **174,** which may be stored in the memory **172,** and the processor **170** may be operatively coupled to the memory **172,** e.g., by accessing the memory via a data bus **176.** The memory unit **172** may include data **177,** and the processor unit **170** may utilize the data **177** in implementing the program **174.** The data **177** for either of the systems **102** and **104** may include, e.g., a request for an asset **154** transmitted from the client device **102** to the client device **104,** and a list of available assets **152** or granted access right data **156** from the client device **104** to the client device **102** or vice versa according to various aspects of the present disclosure. The program **174** may include optionally instructions that, when executed by a processor, perform one or more operations associated with providing a list of available assets **152,** requesting an available asset **154,** or granting a requesting user the access right data requested **156** such as, e.g., a method having one or more features in common with the methods of FIGs. **1****,** **3****,** and/or **4.** For example, the program **174** of the client **102** may include instructions that, when executed by the processor **170,** cause the device to send data to the at least one recipient device **104** and/or provide granted access rights **156** in response to a request for an asset **154** from the client device **104,** in accordance with aspects of the server side of the method depicted in FIG. **1** and/or the sending of asset access rights. The program **174** of the client device **104** may include instructions that, when executed by the processor **170,** cause the client device request access rights to an asset **154** from a list of available assets **152** that can then be provided by the client device **102.**

In some implementations, the request **154** may include a "token" in the form of specially configured code or data that another user or intermediary server could use to recognize that the requesting user is permitted to request a transfer of rights. The token may define how long the asset can be borrowed, which may be in terms of a total elapsed time from grant of access or a total amount of time using the asset. The token may be either provided to all users, who may use it to borrow assets from friends. Alternatively, tokens may be purchased through an online intermediary server. By way of example, and not by way of limitation, when rights to a digital asset are borrowed, the original owner cannot exercise those rights. In some implementations, the original owner may retain an ability to terminate the borrowing at any time. In such a case, the token may still have remaining time that the requesting user can use on another occasion.

Either of the devices **102** and **104** may also include well-known support circuits **178,** such as input/output (I/O) circuits **179,** power supplies (P/S) **180,** a clock (CLK) **181,** and cache **182,** which may communicate with other components of the system, e.g., via the bus **176.** Either of the devices **102** and **104** may optionally include a mass storage device **184** such as a disk drive, CD-ROM drive, tape drive, flash memory, or the like, and the mass storage device **184** may store programs and/or data. Either of the devices **102** and **104** may also optionally include a display unit **186.** The display unit **186** may be in the form of a cathode ray tube (CRT), flat panel screen, touch screen, or other device that displays text, numerals, graphical symbols, or other visual objects. Either of the devices **102** and **104** may also include a user interface **188** to facilitate interaction between the device **102/104** and a user. The user interface **188** may include a keyboard, mouse, light pen, game control pad, touch interface, or other device. The user interface may also include an audio I/O device, such as a speaker and/or microphone.

A user may interact either of the computer systems through the user interface **188.** By way of example, the server may **102** may be a cloud gaming server, and the client device **104** may be a cloud gaming client, and a video game user may interact with a video game executed by the server **102** and streamed to the client **104** through the user interface **188.** Portions of the user interface **188** may include a graphical user interface (GUI) that can be displayed on the display unit **186** in order to facilitate user interaction with the system **102/104.** The system **102/104** may include a network interface **190,** configured to enable the use of Wi-Fi, an Ethernet port, or other communication methods. The network interface **190** may incorporate suitable hardware, software, firmware or some combination thereof to facilitate communication via a telecommunications network, and may support data transport using an unreliable protocol in accordance with certain aspects of the present disclosure. The network interface **190** may be configured to implement wired or wireless communication over local area networks and wide area networks such as the Internet. Either of the devices **102** and **104** may send and receive data and/or requests for files via one or more data packets **199** over a network.

As shown in FIG. **3****,** a set of providing user device instructions **370** may be implemented, e.g., by the providing user device **102.** The providing user device instructions **370** may be formed on a nontransitory computer readable medium such as the memory **172** or the mass storage device **184.** The providing user device instructions **370** may also be part of the process control program **174.** As indicated at **374** the providing user device instructions **370** may include instructions for compiling a list of available assets **152** to be sent to one or more client devices **104** over a network. The instructions **370** may include instructions **374** for providing the list of available assets **152** to the another client device, for example, over the client device platform network. Thereafter, at **376** the instructions may include instructions for receiving a request for an available asset **154** and subsequently, at **378** may include instructions for delivering granted access rights of the available asset **156** to the requesting user device **104.**

As shown in FIG. **4****,** a set of requesting user device instructions **480** may be implemented, e.g., by the requesting user device **104.** The server instructions **480** may be formed on a nontransitory computer readable medium such as the memory **172** or the mass storage device **184.** The server instructions **480** may also be part of the process control program **174.** As indicated at **482,** the instructions **480** may include instructions for receiving a list of available assets **152** from the providing user device **102,** for example, over the client device platform network. Thereafter, at **484,** the instructions may include instructions for delivering a request for an available asset **154** from the requesting user device **104** to the providing user device **102.** Thereafter, at **486,** the instructions may include instructions for receiving the access rights of the available asset **156** to the requesting user device **104.** Furthermore, at **488,** the requesting user device may include instructions for executing the access rights of the available asset, including, but not limited to, downloading any applications or application features necessary to run the requested asset.

The above components may be implemented in hardware, software, firmware, or some combination thereof.

The example, described above with respect to FIG. 2, FIG. 3, and FIG. 4 may be described as a "peer-to-peer" implementation in which rights are transferred directly between two or more user's devices. However, aspects of the present disclosure are not limited to such implementations. According to certain aspects of the present disclosure, the transfer of digital rights may take place through an intermediary, such as an online application server. With the increased use of cloud computing for access to digital services it is possible for the providing user and the requesting user to have accounts that provide them access to their respective digital assets. In such a situation, the transfer of access rights may take place using such a server as an intermediary between the providing and requesting users.

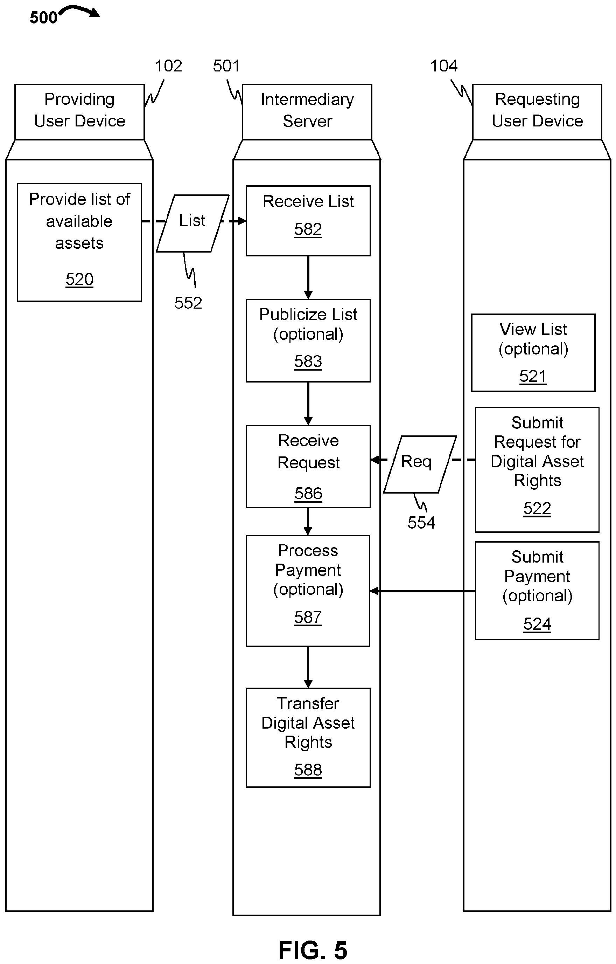

By way of example, and not by way of limitation, FIG. 5 illustrates a method **500** for processing transfer of rights to digital assets on an intermediary server **501** according to aspects of the present disclosure. The dotted arrows represent data being delivered over a network. Rectangular boxes represent processing steps, and the parallelograms represent the various forms of data being transferred. The providing user may have certain rights to one or more digital assets that can be accessed through the providing user's device **102.**

In some implementations, the digital rights in question may be partly under the control of the operator of the intermediary server **104.** For example, an online video game company may sell video games that can be played over the network **199** using the devices **102, 104.** As users play the games they can obtain rewards or acquire digital assets within the context of the game. Such assets may include vehicles, game currency, clothing, weapons, specials powers that can be used within the context of one or more games. By facilitating transfer of digital rights via the intermediary server **104,** the operator can provide an environment for transfer of rights to underlying digital assets in an orderly manner.

Initially, the providing user device **102** provides a list **552** of digital assets that are available for distribution to the intermediary server **501** over the network as indicated at **520.** The list **552** may include the information described above, e.g., the assets and corresponding digital rights that are available for distribution. Preferably, the information included in the list **552** should describe the assets and corresponding rights in as much detail as possible. This is preferable because even though the assets on the list may be the same as those acquired by the providing user, not necessarily all of rights associated with those assets may be available for transfer. Although the providing user may be able to select the rights to be made available, the intermediary server **104** could place restrictions on the rights that the user may select. This may be done at the request of a person or entity that provided the digital assets to the providing user.

By way of example, and not by way of limitation, the list **552** may include a written description of the digital assets that are being made available, pictures of the assets, game play that display achievements earned or user generated content, statistics stored in a save file, a video overview of the package, or any similar disclosures, or any combination thereof.

Additionally, the list **552** may optionally include an asking price for specific assets or rights on the list. The price need not be in currency but may in the form of an offer to barter for rights to other assets. The intermediary server **501** may receive the list **552** from the providing user's device **102,** as indicated at **582.** The intermediary server **501** server **104** may optionally publicize the information included in the list **552,** as indicated at **583,** e.g., by posting it to a digital bulletin board that other users may peruse.

By way of example, and not by way of limitation, the list may be publicized in a searchable database that stores all lists for rights to digital assets currently being made available for transfer. Additionally, the intermediary server **501** may generate a URL that directs visitors directly to the database. By way of example, and not by way of limitation, the list **552** be publicized by posting the URL on a social media site, such as, but not limited to, Facebook, Twitter, or Google+ and YouTube or any other social media asset aggregator.

A requesting user may view the list **552** through the requesting user's device **104,** as indicated at **521.** The requesting user may submit a request **554** for transfer of selected digital asset rights on the list as indicated at **522.** The request **554** may include information identifying the assets and digital rights on the list **552** for which transfer is desired. By way of example and not by way of limitation, the request **554** may be in the form of one or more data packets delivered to the intermediary server **501** over the network. In some implementations, the request **554** may include a "token" in the form of specially configured code or data that the intermediary server **501** may use to determine whether the requesting user is permitted to request a transfer of rights. The token may define how long the asset can be borrowed, which may be in terms of a total elapsed time from grant of access or a total amount of time using the asset.

The intermediary server **501** may receive the request **554,** as indicated at **586** and implement the transfer of digital rights between the providing user and the requesting user, as indicated at **588.** The intermediary server **501** may implement the transfer, e.g., by transferring code and or data for a particular asset or rights to a particular asset from the providing user's account to the requesting user's account to reflect the transfer. Alternatively, the intermediary server may simply change information identifying an "owner" or "authorized user" of a digital asset in a data file for the asset so that, e.g., the requesting user may access the asset but the providing user cannot. Alternatively, the intermediary server may add the requesting user to a list of "authorized users" of the digital asset, and remove it after some predetermined time.

The requesting user may optionally submit payment for the transfer, as indicated at **524** and the intermediary server **501** may optionally process the payment, as indicated at **587.** The intermediary server **501** may process the payment, e.g., by debiting an account associated with the requesting user and crediting an account of the providing user by an agreed upon amount. The intermediary server **501** may collect a portion of this amount as a fee for the rights transfer and/or payment processing.

Aspects of the present disclosure allow users to exchange rights to digital assets via networked devices in creative ways. For example, in some implementations, users who share assets can get or share rewards for doing so. For example a providing user may lend a race car to a requesting user. If the requesting user upgrades the race car, all the upgrade options are unlocked for the providing user when it is returned.

In other implementations, a providing user may share assets instantly to a group of a controlled size or affinity level. This allows users to share a new game or in-game assets with the group. By way of example, and not by way of limitation, a user may have early access to a new Battlefield and purchases a massive armored mechanized vehicle. The user may be permitted to share the vehicle with First Person Shooter buddies only.

Other implementations could allow large scale lending of assets. In such implementations a providing user could purchase a large number of assets to share. These assets may be loaned to requesting users. The providing user may enable the requesting users to lend out the loaned assets to still other users without permission from the providing user. The providing user could retain a virtual "closet" of assets that other users can peruse and choose what they want for any game.

While the above is a complete description of the preferred embodiment of the present invention, it is possible to use various alternatives, modifications and equivalents. Therefore, the scope of the present invention should be determined not with reference to the above description but should, instead, be determined with reference to the appended claims, along with their full scope of equivalents. Any feature described herein, whether preferred or not, may be combined with any other feature described herein, whether preferred or not. In the claims that follow, the indefinite article "a", or "an" refers to a quantity of one or more of the item following the article, except where expressly stated otherwise. The appended claims are not to be interpreted as including means-plus-function limitations, unless such a limitation is explicitly recited in a given claim using the phrase "means for."

## Claims

1. On a client device platform configured to operate on a network, a method for sharing assets comprising:
a) providing a user with a list of assets available for borrowing from a providing user, the list of assets comprising application assets available for utilization within an application;
b) allowing a requesting user to request the use of an application asset included in the list of assets; and
c) transferring one or more application asset rights from the providing user to the requesting user, wherein application asset access rights are granted for a limited period of time, after which rights revert to the providing user, wherein the requesting user may be granted application asset access rights for various periods of time by redeeming respectively varying amounts of credit, wherein the providing user is able to revoke the access rights of the requesting user at will.

2. The method of claim 1, wherein the list is comprised of:
applications available for utilization by the requesting user.

3. The method of claim 1, wherein access to the list is restricted to:
those users who appear on the friends list of the providing user; or
those users who have formed a group within an application.

4. The method of claim 1, wherein specific application assets to be borrowed are selected by the providing user, wherein a social media network or a client device platform network is used to share the list of borrowable application assets.

5. The method of claim 1, wherein the requesting user is only granted application asset access rights provided that the requesting user has sufficient credit to borrow the listed application asset, wherein the credit required to borrow an application asset is a form of credit utilized by the client device platform network, wherein:
the credit is automatically granted to the requesting user; or
the credit is earned by purchasing an application; or
the credit is earned by completing in-application tasks.

6. The method of claim 5, wherein the credit required to borrow an application asset is a form of in-application currency, wherein in-application currency is given to the user upon the purchase of an application and additional in-application currency is earned via the purchase of legacy applications; or wherein the in-application currency is earned by completing in-application tasks and additional in-application currency is earned via completion of in-application tasks completed in legacy applications.

7. The method of claim 1, wherein the rights transferred include only a subset of the rights granted to the providing user, wherein the subset of rights includes a right to use an application asset but not the right to transfer the application to another user.

8. The method of claim 1, wherein the providing user may not utilize a borrowed application asset until the requesting user has relinquished access rights.

9. The method of claim 1, wherein the requesting user is refunded the portion of credit redeemed to receive application asset access rights for a specific time period, in relation to the proportion of asset utilization time remaining before the access right was revoked.

10. The method of claim 1, wherein the rights transferred include a limited field of use of rights, such that rights transferred are applicable across several applications but transfer may be applicable to a selected subset of applications.

11. The method of claim 1, wherein the providing user receives a reward if an application asset is borrowed from the providing user's list.

12. A system comprising:
a processor, and
a memory coupled to the processor;
wherein the processor is configured to perform a method for sharing assets, the method comprising:
a) providing a user with a list of assets available for borrowing from a providing user, the list of assets comprising application assets available for utilization within an application;
b) allowing a requesting user to request the use of an application asset included in the list of assets; and
c) transferring certain application asset rights from the providing user to the requesting user wherein application asset access rights are granted for a limited period of time, after which rights revert to the providing user, wherein the requesting user may be granted application asset access rights for various periods of time by redeeming respectively varying amounts of credit, wherein the providing user is able to revoke the access rights of the requesting user at will.

13. A non-transitory computer readable medium having processor-executable instructions embodied therein, wherein execution of the instructions by a processor cause the processor to implement a method for sharing assets according to claim 1.

## Patentansprüche

1. Verfahren zum Teilen von Assets auf einer Client-Geräteplattform, die zum Betrieb auf einem Netzwerk konfiguriert ist, umfassend:
a) Bereitstellen einer Liste der Assets, die zum Leihen von einem bereitstellenden Nutzer verfügbar sind, an einen Nutzer, wobei die Liste der Assets Applikations-Assets umfasst, die zur Nutzung innerhalb einer Applikation verfügbar sind;
b) Zulassen, dass ein anfordernder Nutzer die Verwendung eines Applikations-Assets anfordert, das in die Liste der Assets eingeschlossen ist; und
c) Übertragen von einem oder mehreren Applikations-Asset-Rechten von dem bereitstellenden Nutzer an den anfordernden Nutzer, wobei Applikations-Asset-Zugriffsrechte für einen begrenzten Zeitraum gewährt werden, nach welchem die Rechte an den bereitstellenden Nutzer zurückgehen, wobei dem anfordernden Nutzer Applikations-Asset-Zugriffsrechte für unterschiedliche Zeiträume gewährt werden können, indem jeweils unterschiedliche Kreditbeträge abbezahlt werden, wobei der bereitstellende Nutzer in der Lage ist, dem anfordernden Nutzer die Zugriffsrechte nach Belieben zu widerrufen.

2. Verfahren nach Anspruch 1, wobei die Liste zusammengesetzt ist aus:
Applikationen, die zur Nutzung durch den anfordernden Nutzer verfügbar sind.

3. Verfahren nach Anspruch 1, wobei der Zugriff auf die Liste begrenzt ist auf:
jene Nutzer, die auf der Freundesliste des bereitstellenden Nutzers erscheinen; oder
jene Nutzer, die eine Gruppe innerhalb einer Applikation gebildet haben.

4. Verfahren nach Anspruch 1, wobei durch den bereitstellenden Nutzer spezifische ausleihbare Applikations-Assets ausgewählt werden, wobei ein Soziale Medien-Netzwerk oder ein Client-Geräteplattformnetzwerk verwendet wird, um die Liste der ausleihfähigen Applikations-Assets zu teilen.

5. Verfahren nach Anspruch 1, wobei dem anfordernden Nutzer nur unter der Maßgabe Applikations-Asset-Zugriffsrechte gewährt werden, dass der anfordernde Nutzer ausreichend Kredit zum Leihen des aufgelisteten Applikations-Assets hat, wobei der zum Leihen eines Applikations-Assets erforderliche Kredit eine Form von Kredit ist, die durch das Client-Geräteplattformnetzwerk genutzt wird, wobei:
der Kredit dem anfordernden Nutzer automatisch gewährt wird; oder
der Kredit verdient wird, indem eine Applikation gekauft wird; oder
der Kredit verdient wird, indem applikationsinterne Aufgaben fertiggestellt werden.

6. Verfahren nach Anspruch 5, wobei der Kredit, der zum Leihen eines Applikations-Assets erforderlich ist, eine Form von applikationsinterner Währung ist, wobei die applikationsinterne Währung dem Nutzer bei Kauf einer Applikation gegeben wird und zusätzliche applikationsinterne Währung mittels Kauf von Vorgängerversionen der Applikationen verdient wird; oder wobei die applikationsinterne Währung verdient wird, indem applikationsinterne Aufgaben fertiggestellt werden, und zusätzliche applikationsinterne Währung mittels Fertigstellung von applikationsinternen Aufgaben verdient wird, die in Vorgängerversionen der Applikationen fertiggestellt werden.

7. Verfahren nach Anspruch 1, wobei die übertragenen Rechte nur einen Teilsatz der Rechte einschließen, die dem bereitstellenden Nutzer gewährt sind, wobei der Teilsatz der Rechte ein Recht zum Nutzen eines Applikations-Assets einschließt, jedoch nicht das Recht, die Applikation an einen anderen Nutzer zu übertragen.

8. Verfahren nach Anspruch 1, wobei der bereitstellende Nutzer ein geliehenes Applikations-Asset erst dann nutzen darf, wenn der anfordernde Nutzer die Zugriffsrechte abgetreten hat.

9. Verfahren nach Anspruch 1, wobei dem anfordernden Nutzer der Anteil des Kredits, der abbezahlt wurde, um Applikations-Asset-Zugriffsrechte für einen spezifischen Zeitraum zu empfangen, anteilig bezogen auf die verbleibende Asset-Nutzungszeit, bevor das Zugriffsrecht widerrufen wurde, erstattet wird.

10. Verfahren nach Anspruch 1, wobei die übertragenen Rechte ein begrenztes Feld der Verwendung von Rechten einschließt, so dass übertragene Rechte über mehrere Applikationen anwendbar sind, jedoch die Übertragung auf einen ausgewählten Teilsatz von Applikationen anwendbar sein kann.

11. Verfahren nach Anspruch 1, wobei der bereitstellende Nutzer eine Belohnung empfängt, wenn ein Applikations-Asset von der Liste des bereitstellenden Nutzers geliehen wird.

12. System, umfassend:
einen Prozessor, und
einen an den Prozessor gekoppelten Speicher;
wobei der Prozessor konfiguriert ist, um ein Verfahren zum Teilen von Assets bereitzustellen, wobei das Verfahren umfasst:
a) Bereitstellen einer Liste der Assets, die zum Leihen von einem bereitstellenden Nutzer verfügbar sind, an einen Nutzer, wobei die Liste der Assets Applikations-Assets umfasst, die zur Nutzung innerhalb einer Applikation verfügbar sind;
b) Zulassen, dass ein anfordernder Nutzer die Verwendung eines Applikations-Assets anfordert, das in die Liste der Assets eingeschlossen ist; und
c) Übertragen von bestimmten Applikations-Asset-Rechten von dem bereitstellenden Nutzer an den anfordernden Nutzer, wobei Applikations-Asset-Zugriffsrechte für einen begrenzten Zeitraum gewährt werden, nach welchem die Rechte an den bereitstellenden Nutzer zurückgehen, wobei dem anfordernden Nutzer Applikations-Asset-Zugriffsrechte für unterschiedliche Zeiträume gewährt werden können, indem jeweils unterschiedliche Kreditbeträge abbezahlt werden, wobei der bereitstellende Nutzer in der Lage ist, dem anfordernden Nutzer die Zugriffsrechte nach Belieben zu widerrufen.

13. Nicht-flüchtiges computerlesbares Medium mit darin verkörperten, prozessorseitig ausführbaren Anweisungen, wobei die Ausführung der Anweisungen durch einen Prozessor bewirkt, dass der Prozessor ein Verfahren zum Teilen von Assets gemäß Anspruch 1 implementiert.

## Revendications

1. Procédé de partage de ressources sur une plate-forme d'un dispositif client configuré pour fonctionner sur un réseau, le procédé comprenant les étapes consistant à :
a) fournir à un utilisateur une liste de ressources disponibles à emprunter à un utilisateur fournisseur, la liste de ressources comprenant des ressources d'application disponibles pour une utilisation dans une application ;
b) permettre à un utilisateur demandeur de demander l'utilisation d'une ressource d'application incluse dans la liste de ressources ; et
c) transférer un ou plusieurs droits aux ressources d'application de l'utilisateur fournisseur à l'utilisateur demandeur, dans lequel les droits d'accès aux ressources d'application sont accordés pour une période de temps limitée, après laquelle les droits reviennent à l'utilisateur fournisseur, dans lequel l'utilisateur demandeur peut se voir accorder des droits d'accès aux ressources d'application pour diverses périodes de temps en utilisant respectivement des montants de crédit variables et dans lequel l'utilisateur fournisseur peut révoquer à volonté les droits d'accès de l'utilisateur demandeur.

2. Procédé selon la revendication 1, dans lequel la liste comprend : des applications disponibles pour une utilisation par l'utilisateur demandeur.

3. Procédé selon la revendication 1, dans lequel l'accès à la liste est limité :
aux utilisateurs qui figurent sur la liste d'amis de l'utilisateur fournisseur ; ou
aux utilisateurs qui ont formé un groupe au sein d'une application.

4. Procédé selon la revendication 1, dans lequel des ressources d'application spécifiques à emprunter sont sélectionnées par l'utilisateur fournisseur, dans lequel un réseau de médias sociaux ou un réseau de la plate-forme du dispositif client est utilisé pour partager la liste de ressources d'application pouvant être empruntées.

5. Procédé selon la revendication 1, dans lequel l'utilisateur demandeur se voit uniquement accorder des droits d'accès aux ressources d'application à condition que l'utilisateur demandeur dispose d'un crédit suffisant pour emprunter la ressource d'application répertoriée dans la liste, dans lequel le crédit requis pour emprunter une ressource d'application est une forme de crédit utilisée par le réseau de la plate-forme du dispositif client, dans lequel :
le crédit est automatiquement accordé à l'utilisateur demandeur ; ou bien
le crédit est gagné en achetant une application ; ou bien
le crédit est gagné en accomplissant des tâches de l'application.

6. Procédé selon la revendication 5, dans lequel le crédit requis pour emprunter une ressource d'application est une forme de monnaie interne à l'application, dans lequel la monnaie interne à l'application est donnée à l'utilisateur lors de l'achat d'une application et de la monnaie supplémentaire interne à l'application est gagnée par le biais de l'achat d'applications traditionnelles ; ou dans lequel la monnaie interne à l'application est gagnée en accomplissant des tâches de l'application et de la monnaie supplémentaire interne à l'application est gagnée par l'accomplissement de tâches de l'application réalisées dans des applications traditionnelles.

7. Procédé selon la revendication 1, dans lequel les droits transférés ne comprennent qu'un sous-ensemble des droits accordés à l'utilisateur fournisseur, dans lequel le sous-ensemble de droits comprend un droit d'utiliser une ressource d'application mais non le droit de transférer l'application à un autre utilisateur.

8. Procédé selon la revendication 1, dans lequel l'utilisateur fournisseur ne peut pas utiliser une ressource d'application empruntée tant que l'utilisateur demandeur n'a pas renoncé aux droits d'accès.

9. Procédé selon la revendication 1, dans lequel l'utilisateur demandeur se voit rembourser la partie du crédit utilisée pour recevoir des droits d'accès aux ressources d'application pendant une période de temps spécifique, en rapport à la proportion de temps d'utilisation des ressources restantes avant que le droit d'accès ne soit révoqué.

10. Procédé selon la revendication 1, dans lequel les droits transférés comprennent un domaine limité d'utilisation des droits, de sorte que les droits transférés sont applicables à travers plusieurs applications mais le transfert peut être applicable à un sous-ensemble sélectionné d'applications.

11. Procédé selon la revendication 1, dans lequel l'utilisateur fournisseur reçoit une prime si une ressource d'application est empruntée à la liste de l'utilisateur fournisseur.

12. Système comprenant :
un processeur, et
une mémoire couplée au processeur ;
dans lequel le processeur est configuré pour exécuter un procédé de partage de ressources, le procédé comprenant les étapes consistant à :
a) fournir à un utilisateur une liste de ressources disponibles à emprunter à un utilisateur fournisseur, la liste de ressources comprenant des ressources d'application disponibles pour une utilisation dans une application ;
b) permettre à un utilisateur demandeur de demander l'utilisation d'une ressource d'application incluse dans la liste de ressources ; et
c) transférer certains droits aux ressources d'application de l'utilisateur fournisseur à l'utilisateur demandeur, dans lequel les droits d'accès aux ressources d'application sont accordés pour une période de temps limitée, après laquelle les droits reviennent à l'utilisateur fournisseur, dans lequel l'utilisateur demandeur peut se voir accorder des droits d'accès aux ressources d'application pour diverses périodes de temps en utilisant respectivement des montants de crédit variables, dans lequel l'utilisateur fournisseur peut révoquer à volonté les droits d'accès de l'utilisateur demandeur.

13. Support non transitoire, lisible par ordinateur, dans lequel sont intégrées des instructions exécutables par un processeur, dans lequel l'exécution des instructions par un processeur amène le processeur à mettre en œuvre un procédé de partage de ressources selon la revendication 1.
